# EUROPEAN PATENT SPECIFICATION

(11) **EP 2 039 557 B1**
(45) Date of publication and mention of the grant of the patent: **24.05.2017**
(21) Application number: 07116941.1
(22) Date of filing: 21.09.2007
(51) Int. Cl.: B60L 11/18, B60M 7/00, B60L 1/00, B60L 1/02, B60L 11/00, B60L 11/16

(54) **Electrical energy recharging device for industrial or transport vehicle, assembly comprising said device and said vehicle, and recharging assembly comprising several of said devices**
Vorrichtung zur Wiederaufladung der elektrischen Energie in einem Nutz- oder Transportfahrzeug, Baugruppe mit besagter Vorrichtung sowie besagtem Fahrzeug sowie Wiederaufladungsanordnung mit mehreren Exemplaren der besagten Vorrichtung
Dispositif de recharge d'énergie électrique pour véhicule industriel ou transport, ensemble comportant un tel dispositif et ledit véhicule, et ensemble de recharge comportant plusieurs de ces dispositifs

(43) Date of publication of application: 25.03.2009
(73) Proprietor: Iveco France S.A., 69200 Vénissieux (FR)
(72) Inventor: Steffen, Bernard, 69300 Caluire et Cuire (FR)
(74) Representative: Franzolin, Luigi

(56) References cited:
- EP-A- 0 788 212
- EP-A- 1 205 340
- CH-A5- 688 598
- CH-A5- 688 599
- GB-A- 2 185 866

## Description

The invention relates to an electrical energy recharging device for industrial or transport vehicle, an assembly comprising said electrical energy recharging device and said vehicle, in addition to an electrical energy recharging assembly comprising several of said recharging devices.

The invention is aimed specifically at transport vehicles, i.e. vehicles whose route involves at least one station stop, during which people are likely to board the vehicle, and also to alight from it. From this perspective, such a transport vehicle could for example be a bus or a tram. However, the invention can also be used for industrial-type vehicles, specifically those which have a pre-set route, such as for example goods transport lorries in an urban environment, or compactors.

The invention relates to the recharging of said vehicle with electrical energy. The vehicle is consequently equipped with a reserve of electrical energy, of a battery or super capacity type, or with a reserve of energy that can easily be converted into electrical energy, such as a flywheel. Said reserve enables the power supply of the vehicle, specifically of its traction engine, as well as the driving of various elements of its equipment, such as cooling, power steering, air generation, air-conditioning, heating and 24V onboard electric network.

It is understandable that said energy reserve tends to gradually run out as the transport vehicle is used. Consequently, said reserve must receive electrical energy from the exterior, for it to be recharged.

Thus, first of all it is known for said energy reserve to be recharged during a prolonged stop, for example at night, or more rarely at the end of the line for a bus. In this case, said reserve is connected to a fixed station, by means of a plug-in connector. This solution, however, has some disadvantages, insofar as said fixed station is costly, heavy and cumbersome.

As an alternative, electrical energy is harnessed continuously from a pantograph or a pole, which is connected to overhead wires. However, this solution has other
disadvantages, specifically in financial and visual terms, as the various aforementioned wires harm the urban environment.

Examples of electrical energy recharging devices are disclosed in CH688599 A and CH688598 A.

The above having been specified, this invention aims to overcome the various disadvantages.

To this end, it has as its object an electrical energy recharging device according to claim 1.

A further object of the invention is an assembly comprising a vehicle and an energy recharging device according to claim 9.

The invention shall now be described below with reference to the annexed drawings, given merely by way as non-limitative example, in which:
figure 1 is a longitudinal cross-section illustrating an electrical energy recharging device according to the invention, in its retracted position;
figure 2 is a perspective view of said electrical energy recharging device;
figure 3 is a longitudinal cross-section, like figure 1, illustrating said electrical energy recharging device in its extended position;
figure 4 is a schematic view illustrating the connection between said electrical energy recharging device and the vehicle; and
figure 5 is a longitudinal cross-section on a larger scale, illustrating more precisely the connection between said recharging device and the vehicle.

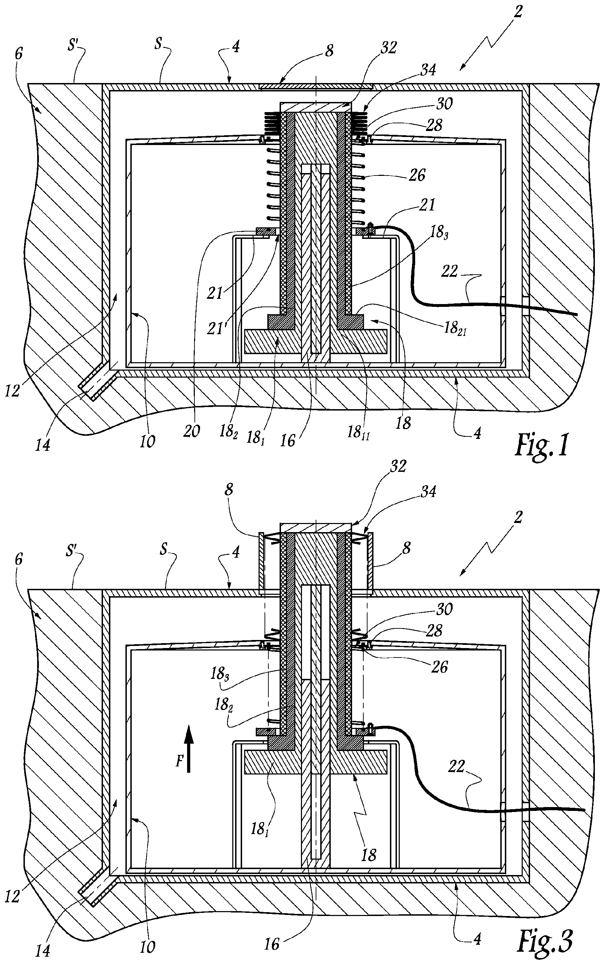

The electrical energy recharging device according to this invention, illustrated in figures 1 to 3, is designated as a whole by reference number 2. It comprises firstly a caisson 4, of a parallelepiped shape, of which the upper surface S is roughly flush with the surface S' of a road 6, or of an obstacle designed to limit the speed of the vehicle. The caisson 4, which is equipped with a hatch 8, defines with an internal case 10 an intermediate space 12 used for channeling dirt and humidity, which are later evacuated by a pipe 14.

The case 10 of the recharging device 2 is equipped with a fixed central mast 16 around which a mobile piston 18 can be moved in a roughly vertical direction, specifically due to a cylinder which is not illustrated. Only one piston is shown in the drawings as the invention lies in the structure of the piston. It is obvious, however, see also the cited prior art, that two pistons are needed at each location in order to charge the vehicle conductively.

Said piston 18 comprises a central body 181, made from any appropriate insulating material.

In its lower part, said central body delimits a shoulder 1811, above which an intermediate insert 182 is connected, made from any appropriate insulating material. Said insert 182 also defines a shoulder 1821, from which extends an external sheath 183, made from any appropriate insulating material, which may for example be identical to the material of the central body 181. Thus, said body 181, said insert 182 and said sheath 183 extend concentrically outwards, all having upper ends which are flush with each other.

The device also comprises a contact ring 20, made from conductive material, which is suitable to rest on several seats 21, intended to limit the downwards movement of said ring 20. These various seats 21, of which for example there may be three, define a central opening 21'.

Note that the interior diameter of the contact ring 20 is greater than the exterior diameter of the sheath 183 of the piston 18, so that this ring may move freely in relation to the piston, in a vertical direction. Moreover, the exterior diameter of the ring is greater than the diameter of the opening 21', so that the contact ring may rest against the seats 21.

Lastly, the diameter of said opening 21' is greater than the exterior diameter of the shoulder 1821 of the insert 182, so that said shoulder is free to pass through the opening. Meanwhile, the exterior diameter of the shoulder 1821 is greater than the interior diameter of the contact ring 20 so that, as will be seen below, the upwards movement of the piston 18 also drives the upwards return stroke of said ring 20, by mutual of said shoulder 1821 and said ring.

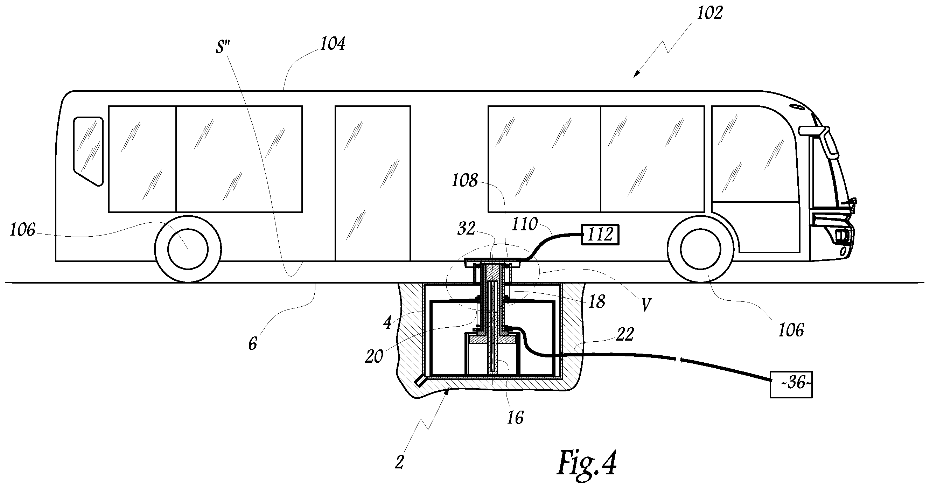

A wire 22 extends out from said contact ring 20, said wire being connected to a fixed energy supply station, as will be described in greater detail in reference to figure 4. The conductive ring 20 supports an insulating ring 24, against which the first end of a return spring 26 comes to bear. The presence of this insulating ring 24 avoids any risk of contact between the spring 26 with a live area.

The other end of said spring 26 comes to bear against a buffer 28 placed near the upper wall of the case 10, at the side of an opening 30 which allows the piston 18 to pass through. The upper part of the latter is joined with an electrical connection plate 32, which is electrically connected to the conductive insert 182. Lastly, an insulating gasket 34 is connected to the edge of the piston 18, above the aforementioned buffer 28.

The recharging device 2 is suitable to cooperate with a vehicle, shown schematically in figure 4, which is in the example illustrated a transport vehicle designated as a whole by reference 102. This vehicle is equipped typically with a body 104 as well as with wheels 106, which are for example mounted on tyres.

The lower surface S" of the body 104 is equipped with a conducting plate 108, intended to be electrically connected with plate 32. Said conducting plate 108 is
connected by means of an electric line 110 to an energy reserve 112, of a battery or super capacity variety for example.

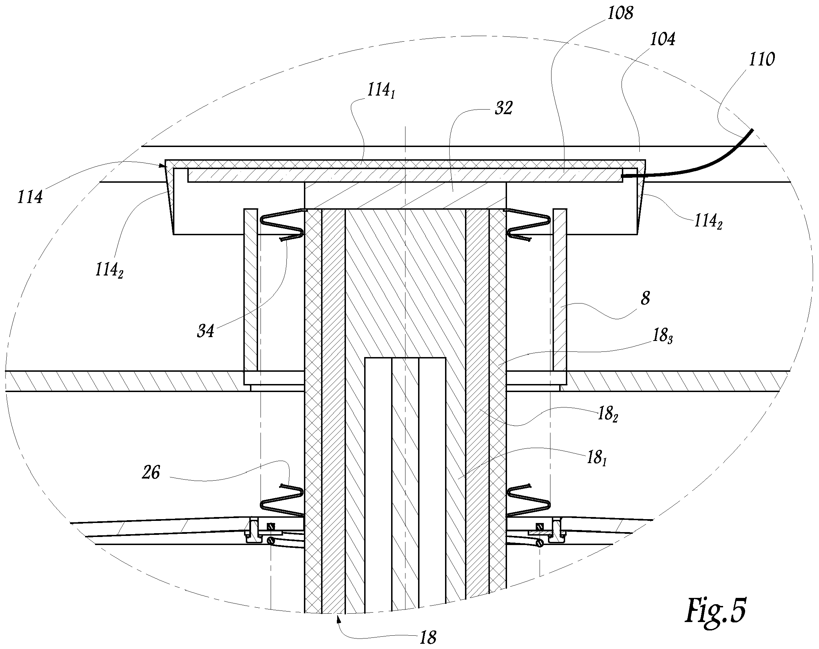

Between plate 108 and body 104, there is an insulating element 114, of which the flat bottom 1141 is extended by an external skirt 1142. As illustrated in more detail in figure 5, said skirt 1142 is suitable to extend downwards to cover plate 108 and plate 32, when they are in contact with each other.

The usage of the electrical energy recharging device 2 described above shall now be explained below.

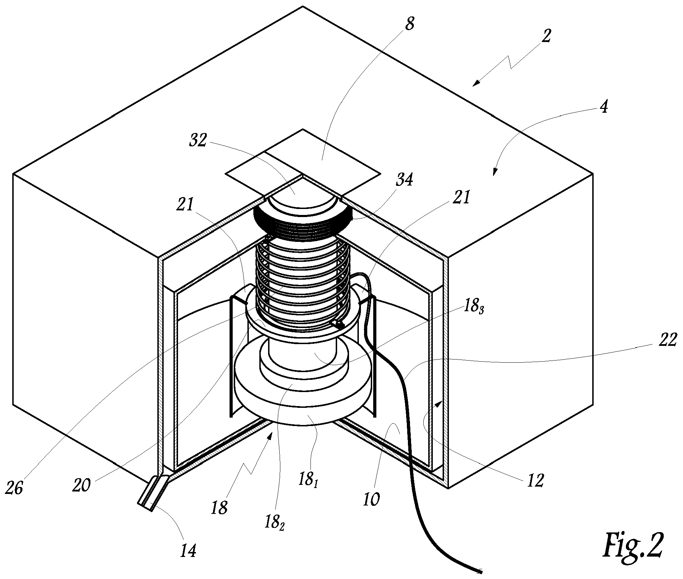

We may suppose that initially the transport vehicle 102 runs in the direction of a station, in which the recharging device 2 is fitted. Before said vehicle 102 stops at said station, the device is in its retracted position shown in figures 1 and 2. In such conditions, piston 18 is retracted within the caisson 4, the hatch of which is closed.

In this withdrawn or retracted position, illustrated in figures 1 and 2, the plate 32 of the piston 18 is not supplied with current. Indeed, insert 182 is not in contact with ring 20. Moreover, if it comes into contact with the piston, this contact would take place with the insulating external sheath 183. Therefore, if somebody should open the hatch 8 and touch the plate 32, they would in any case not be exposed to danger of electrocution.

Then, when the vehicle arrives at the aforementioned station, the plate 108 is immobilised with regard to piston 18. To this end, there are advantageously included means (not illustrated) of detecting and then identifying the vehicle, so as to avoid the untimely opening of the hatch 8. The means of detection are, for example, formed by any appropriate sensor, specifically of an optical or RFID (Radio Frequency Identification) variety.

Once the detection and identification have been carried out, the hatch 8 is then opened, and the cylinder is activated. This allows the piston 18 to be moved in the direction of arrow F, towards its extended position illustrated in figure 3.

At an intermediate stage of the upwards return of the piston 18, the shoulder 1822 of the conductive insert 182 comes into contact with the ring 20, so as to push it back up. This physical contact is accompanied by an electrical connection. Therefore, when plate 32 comes to bear against plate 108, ring 20 is still in contact with shoulder 1821, so that insert 182 is able to supply electricity to plate 32, from wire 22.

Moreover, gasket 34 is extended whereas on the contrary spring 26 is compressed. In figure 3 said gasket and said spring are only shown partially.

Consequently, once piston 18 has finished moving, the energy reserve 112 of the vehicle 102 is also electrically in contact with a fixed energy supply station, which is referred to with number 36 in figure 4. This electrical contact takes place successively by means of the wire 22, the contact ring 20, the conductive insert 182, the connection plate 32, the connecting plate 108 and lastly the line 110. In such conditions it is possible to electrically recharge the vehicle's reserve 112.

Note that when the piston 18 is in its extended position, the skirt 1142 forms a safety element, as shown in figure 5. Indeed, said skirt protrudes downwards beyond plate 108 and plate 32. Consequently, anybody coming underneath the vehicle or inserting an object in this space could not come into contact with the conductive elements 32 and 108.

Once this operation has taken place, the power supply to the cylinder is stopped. The piston 18 then returns to its retracted position as in figure 1, by means of the joint action of the spring 26, of gravity and of the deactivation of the cylinder which is advantageously created with passive security, without external energy.

In an intermediate phase of this descent, the ring 20 comes to stop against seats 21, so that it is dissociated from the piston which continues to descend. Consequently, plate 32 is again no longer supplied with electricity. Lastly, the hatch 8 is closed again, when the transport vehicle 102 departs again in the direction of its next stop.

The invention allows the aforementioned objectives to be reached.

Thus, firstly note that the invention is particularly advantageous in aesthetic terms as it entirely avoids the need for overhead wires.

Furthermore, the invention guarantees a reduction of the energy reserve stored on board, as it can be recharged periodically.

Note also that it is possible to use several recharging devices, identical to the one described above, along the route of the transport vehicle or industrial vehicle. With this solution, each recharging device is likely to have relatively reduced power and dimensions.

Note also that plate 108 advantageously has considerably larger dimensions than those of the connection plate 32, in both directions of the face of the lower surface S". This allows contact to be guaranteed between these two mechanical elements, no matter how the manoeuvres of the vehicle are dispersed Lastly, we underline that the invention has some remarkable advantages in terms of safety. Indeed, in the piston's retracted position, plate 32 is not supplied with electricity, so that it is not able to electrocute anybody who touches it. Moreover, in the piston's extended position, the skirt 1142 forms a barrier intended to prevent any contact with the electrically conductive elements.

## Claims

1. Electrical energy recharging device (2) for industrial or transport vehicle (2) comprising:
- a caisson (4) suitable to be buried in a road (6) or in a speed limitation obstacle,
- a mobile piston (18) made at least partially from conductive material, said mobile piston (18) being suitable to assume a first retracted position in which it is housed entirely within the caisson (4), as well as a second extended position in which it protrudes vertically at least partially outside said caisson (4),
- means (20, 22) enabling said mobile piston (18) to be electrically connected to a fixed electricity supply station (36)
- said mobile piston (18) being equipped with an electrical connection element (32) suitable to come into contact with a complementary electrical connection element (108) of said transport vehicle (102), so as to convey electrical energy from the fixed station (36) to the direction of the vehicle
**characterized in that**
said electrical connection element (32) is a connection plate, placed at the upper end of the mobile piston (18), said means (20,22) enabling said mobile piston (18) to be electrically connected to a fixed electricity supply station (36) including a contact ring (20), said mobile piston (18) comprising an external insulating sheath (18₃) as well as an intermediate conductive area (18₂) electrically connected to the electrical connection element (32), the contact ring (20) being distant from the conductive area (18₂) of said mobile piston (18) in said retracted position, while said ring (20) is in contact with said conductive area (18₂) when the mobile piston (18) is in said extended position.

2. Recharging device according to claim 1, **characterised in that** it includes means for moving the mobile mechanism (18) from its retracted position to its extended position, particularly a cylinder ;

3. Recharging device according to claim 1 or 2, **characterised in that** it comprises means (26) of returning the mobile mechanism (18) to its retracted position, particularly a return spring (26).

4. Recharging device according to claim 1, **characterised in that**, in the retracted position, the contact ring (20) bears against at least one seat (21), suitable to limit the downwards stroke of the ring when the mobile mechanism descends (18) into its retracted position, while the or each seat (21) is suitable to not hinder the return upwards stroke of said mobile mechanism towards its extended position.

5. Recharging device according to any of the previous claims, **characterised in that** a case (10) is set inside the caisson (4) in which most of the mobile mechanism (18) is housed, at least in its retracted position, said case (10) defining, with the caisson (14), an intermediate space (12) for channelling dirt and humidity, said intermediate space being in communication with a waste pipe (14).

6. Recharging device according to claims 3 and 5, **characterised in that** the case (10) is provided with an opening (30) to allow the mobile mechanism (18) pass through, while a return spring (26) extends between a buffer (28) placed at the edge of said opening (30) and an insulating ring (24) placed on the mobile mechanism (18).

7. Recharging device according to any of the previous claims, **characterised in that** the caisson (4) is equipped with a movable hatch (8), to allow the mobile mechanism (18) to pass through in its extended position;

8. Recharging device according to any of the previous claims, **characterised in that** it includes means for recognising the presence of a vehicle (102) above the recharging device (2), particularly an optical sensor or an RFID or equivalent sensor.

9. Assembly comprising an industrial or transport vehicle (102) and an electrical energy recharging device (2) according to any of the previous claims, said vehicle (102) comprising a body (104) mounted on wheel (106), said body (104) being equipped with a complementary electrical connection element (108) suitable to come into electrical contact with the electrical connection element (32) of the recharging device (2), when the mobile mechanism (18) is in its extended position.

10. Assembly according to claim 9, **characterised in that** the complementary electrical connection element is a conducting plate (108) set onto the lower surface (S") of the vehicle body (104).

11. Assembly according to claim 10, **characterised in that** the conducting plate (108) has dimensions that are considerably greater than those of the electrical connection element (32) of the recharging device (2).

12. Assembly according to any of claims 9 to 11, **characterised in that** the vehicle (102) is equipped with an intermediate insulating mechanism (114) extending between the vehicle body (104) and the complementary electrical connection element (108), said intermediate insulating mechanism being equipped with a skirt (114₂) suitable to extend downwards to cover the electrical connection element (32) and the complementary electrical connection element (108), when the latter two elements are in contact with each other.

13. Electrical recharging assembly comprising several recharging devices (2) according to any of claims 1 to 8, each recharging device being placed at a station at which the industrial or transport vehicle (102) makes a stop.

## Patentansprüche

1. Elektrische Ladevorrichtung (2) für Nutz- oder Transportfahrzeuge (2), umfassend:
- einen Senkkasten (4), dazu geeignet, in eine Straße (6) oder in ein Geschwindigkeitsbegrenzungshindernis versenkt zu werden,
- einen beweglichen Kolben (18), der zumindest teilweise aus einem leitenden Material hergestellt ist, welcher bewegliche Kolben (18) dazu geeignet ist, eine erste eingezogene Position einzunehmen, in welcher er vollständig in dem Senkkasten (4) aufgenommen ist, sowie eine zweite ausgefahrene Position, in welcher er senkrecht zumindest teilweise aus dem Senkkasten (4) herausragt,
- Mittel (20, 22), die es dem beweglichen Kolben (18) ermöglichen, elektrisch mit einer feststehenden elektrischen Versorgungsstation (36) verbunden zu werden,
- welcher bewegliche Kolben (18) mit einem elektrischen Verbindungselement (32) ausgestattet ist, das dazu geeignet ist, in Kontakt mit einem komplementären elektrischen Verbindungselement (108) des Transportfahrzeugs (102) zu kommen, um elektrische Energie von der festen Station (36) zum Fahrzeug zu liefern,
**dadurch gekennzeichnet,**
**dass** das elektrische Verbindungselement (32) einer Verbindungsplatte ist, die am oberen Ende des beweglichen Kolbens (18) angeordnet ist, und die Mittel (20, 22), die es dem beweglichen Kolben (18) ermöglichen, elektrisch mit einer festen elektrischen Versorgungsstation (36) verbunden zu werden, einen Kontaktring (20) einschließen, wobei der bewegliche Kolben (18) eine äußere isolierende Hülle (18₃) sowie einen mittleren leitenden Bereich (18₂) umfasst, der elektrisch mit dem elektrischen Verbindungselement (32) verbunden ist, wobei der Kontaktring (20) von dem leitenden Bereich (18₂) des beweglichen Kolbens (18) in der eingezogenen Position entfernt ist, während der Ring (20) mit dem leitenden Bereich (18₂) in Kontakt steht, wenn der bewegliche Kolben (18) sich in der ausgefahrenen Position befindet.

2. Ladevorrichtung gemäß Anspruch 1, **dadurch gekennzeichnet, dass** diese Mittel zur Bewegung des beweglichen Mechanismus (18) aus der eingezogenen Position in die ausgefahrene Position umfasst, insbesondere einen Zylinder.

3. Ladevorrichtung gemäß Anspruch 1 oder 2, **dadurch gekennzeichnet, dass** diese Mittel (26) zur Rückführung des beweglichen Mechanismus (18) in seine eigezogene Position umfasst, insbesondere eine Rückholfeder (26).

4. Ladevorrichtung gemäß Anspruch 1, **dadurch gekennzeichnet, dass** in der eingezogenen Position der Kontaktring (20) an zumindest einem Sitz (21) anliegt, geeignet zur Begrenzung des Abwärtshubes des Rings, wenn der mobile Mechanismus sich in die eingezogene Position absenkt, wobei der oder jeder Sitz (21) geeignet ist, nicht den umgekehrten Aufwärtshub des mobilen Mechanismus zurück in die ausgefahrene Position zu behindern.

5. Ladevorrichtung gemäß einem der vorhergehenden Ansprüche, **dadurch gekennzeichnet, dass** ein Gehäuse (10) in dem Senkkasten (4) eingesetzt ist, in welchem der größte Teil des beweglichen Mechanismus (18) zumindest in der eingezogenen Position aufgenommen ist, welches Gehäuse (10) gemeinsam mit dem Senkkasten (14) einen Zwischenraum (12) zur Führung von Schmutz und Feuchtigkeit begrenzt, welcher Zwischenraum in Verbindung mit einem Abflussrohr (14) steht.

6. Ladevorrichtung gemäß den Ansprüchen 3 und 5, **dadurch gekennzeichnet, dass** das Gehäuse (10) mit einer Öffnung (30) versehen ist, die ein Passieren des beweglichen Mechanismus (18) ermöglicht, während sich eine Rückholfeder (26) zwischen einem Puffer (28), der an der Kante der Öffnung (30) angeordnet ist, und einem Isolationsring (24) erstreckt, der auf dem beweglichen Mechanismus (18) angeordnet ist.

7. Ladevorrichtung gemäß einem der vorhergehenden Ansprüche, **dadurch gekennzeichnet, dass** der Senkkasten (4) mit einer beweglichen Luke (8) ausgestattet ist, die es dem mobilen Mechanismus (18) ermöglicht, in die ausgefahrene Position hindurch zu treten.

8. Ladevorrichtung gemäß einem der vorhergehenden Ansprüche, **dadurch gekennzeichnet, dass** diese Mittel zur Erkennung der Präsenz eines Fahrzeugs (102) oberhalb der Ladevorrichtung (2) umfasst, insbesondere einen optischen Sensor oder eine Radiofrequenz-Identifikation (RFID) oder einen gleichwertigen Sensor.

9. Anordnung, umfassend ein Nutz- oder Transportfahrzeug (102) und eine elektrische Ladevorrichtung (2) gemäß einem der vorhergehenden Ansprüche, welches Fahrzeug (102) einen Korpus (104) umfasst, der auf Rädern (106) angeordnet ist, welcher Korpus (104) mit einem komplementären elektrischen Verbindungselement (108) ausgestattet ist, dazu geeignet, in elektrischen Kontakt mit dem elektrischen Verbindungselement (32) der Ladevorrichtung (2) zu treten, wenn der mobile Mechanismus (18) sich in seiner ausgefahrenen Position befindet.

10. Anordnung gemäß Anspruch 9, **dadurch gekennzeichnet, dass** das komplementäre elektrische Verbindungselement eine leitende Platte (108) ist, die auf die untere Oberfläche (S") des Fahrzeugkorpus (104) gesetzt ist.

11. Anordnung gemäß Anspruch 10, **dadurch gekennzeichnet, dass** die leitende Platte (108) Abmessungen aufweist, die wesentlich größer sind als diejenigen des elektrischen Verbindungselements (32) der Ladevorrichtung (2).

12. Anordnung gemäß einem der Ansprüche 9 bis 11, **dadurch gekennzeichnet, dass** das Fahrzeug (102) mit einem Zwischenisolationsmechanismus (114) ausgestattet ist, der sich zwischen dem Fahrzeugkorpus (104) und dem komplementären elektrischen Verbindungselement (108) erstreckt, welcher Zwischenisolationsmechanismus mit einer Schürze (114₂) versehen ist, die dazu geeignet ist, sich zum Abdecken des elektrischen Verbindungselements (32) und des komplementären elektrischen Verbindungselements (108) abwärts zu erstrecken, wenn die letztgenannten beiden Elemente in Kontakt miteinander stehen.

13. Elektrische Ladungsanordnung, umfassend mehrere Ladevorrichtungen (2) gemäß einem der Ansprüche 1 bis 8, von denen jede Ladevorrichtung an einer Station angeordnet ist, an welcher das Nutz- oder Transportfahrzeug (102) hält.

## Revendications

1. Dispositif de recharge d'énergie électrique (2) pour un véhicule industriel ou de transport (2) comprenant :
- un caisson (4) adapté pour être enterré dans une route (6) ou dans un obstacle de limitation de vitesse,
- un piston mobile (18) réalisé au moins partiellement avec un matériau conducteur, ledit piston mobile (18) étant adapté pour adopter une première position rétractée, dans laquelle il est logé entièrement dans le caisson (4), ainsi qu'une seconde position étendue, dans laquelle il fait saillie verticalement au moins partiellement à l'extérieur dudit caisson (4),
- des moyens (20, 22) permettant audit piston mobile (18) d'être relié électriquement à un poste d'alimentation en électricité fixe (36),
- ledit piston mobile (18) étant équipé d'un élément de connexion électrique (32) adapté pour venir en contact avec un élément de connexion électrique complémentaire (108) dudit véhicule de transport (102) de sorte à transporter de l'énergie électrique du poste fixe (36) à la direction du véhicule,
**caractérisé en ce que**
ledit élément de connexion (32) est une plaque de connexion, placée sur l'extrémité supérieure du piston mobile (18), lesdits moyens (20, 22) permettant audit piston mobile (18) d'être relié électriquement à un poste d'alimentation d'électricité fixe (36) incluant un anneau de contact (20), ledit piston mobile (18) comprenant une gaine d'isolation externe (18₃) ainsi qu'une zone conductrice intermédiaire (18₂) reliée électriquement à l'élément de connexion électrique (32), l'anneau de contact (20) étant distante de la zone conductrice (18₂) dudit piston mobile (18) dans ladite position rétractée, alors que ledit anneau (20) est en contact avec ladite zone conductrice (18₂) lorsque le piston mobile (18) est dans ladite position étendue.

2. Dispositif de recharge selon la revendication 1, **caractérisé en ce qu'**il comprend des moyens pour le déplacement du mécanisme mobile (18) de sa position rétractée à sa position étendue, particulièrement un cylindre.

3. Dispositif de recharge selon la revendication 1 ou 2, **caractérisé en ce qu'**il comprend des moyens (26) de rappel du mécanisme de mobile (18) dans sa position rétractée, particulièrement un ressort de rappel (26).

4. Dispositif de recharge selon la revendication 1, **caractérisé en ce que** dans la position rétractée, l'anneau de contact (20) porte contre au moins un siège (21) adapté pour limiter la course vers le bas de l'anneau lorsque le mécanisme mobile descend (18) dans sa position rétractée, alors que le ou chaque siège (21) est adapté pour ne pas empêcher la course vers le haut de rappel dudit mécanisme mobile vers sa position étendue.

5. Dispositif de recharge selon l'une quelconque des revendications précédentes, **caractérisé en ce qu'**un carter (10) est placé dans le caisson (4), dans lequel la plupart du mécanisme mobile (18) est logé, au moins dans sa position rétractée, ledit carter (10) définissant avec le caisson (14), un espace intermédiaire (12) pour acheminer la poussière et l'humidité, ledit espace intermédiaire étant en communication avec un trop-plein (14).

6. Dispositif de recharge selon les revendications 3 et 5, **caractérisé en ce que** le carter (10) est doté d'une ouverture (30) pour permettre au mécanisme mobile (18) de passer au travers alors qu'un ressort de rappel (26) s'étend entre un tampon (28) placé sur l'arête de ladite ouverture (30) et un anneau d'isolation (24) placé sur le mécanisme mobile (18).

7. Dispositif de recharge selon l'une quelconque des revendications précédentes, **caractérisé en ce que** le caisson (4) est équipé d'une trappe mobile (8) pour permettre au mécanisme mobile (18) de passer au travers dans sa position étendue.

8. Dispositif de recharge selon l'une quelconque des revendications précédentes, **caractérisé en ce qu'**il comprend des moyens pour reconnaître la présence d'un véhicule (102) au-dessus du dispositif de recharge (2), particulièrement un capteur optique ou un capteur RFID ou équivalent.

9. Ensemble comprenant un véhicule industriel ou de transport (102) et un dispositif de recharge d'énergie électrique (2) selon l'une quelconque des revendications précédentes, ledit véhicule (102) comprenant un corps (104) monté sur une roue (106), ledit corps (104) étant équipé d'un élément de connexion électrique complémentaire (108) adapté pour venir en contact électrique avec l'élément de connexion électrique (108) adapté pour venir en contact électrique avec l'élément de connexion électrique (32) du dispositif de recharge (2) lorsque le mécanisme mobile (18) est dans sa position étendue.

10. Ensemble selon la revendication 9, **caractérisé en ce que** l'élément de connexion électrique complémentaire est une plaque conductrice (108) placée sur la surface inférieure (S") du corps de véhicule (104).

11. Ensemble selon la revendication 10, **caractérisé en ce que** la plaque conductrice (108) présente des dimensions qui sont considérablement supérieures à celles de l'élément de connexion électrique (32) du dispositif de recharge (2).

12. Ensemble selon l'une quelconque des revendications 9 à 11, **caractérisé en ce que** le véhicule (102) est équipé d'un mécanisme d'isolation intermédiaire (114) s'étendant entre le corps de véhicule (104) et l'élément de connexion électrique complémentaire (108), ledit mécanisme d'isolation intermédiaire étant équipé d'une jupe (114₂) adaptée pour s'étendre vers le bas pour couvrir l'élément de connexion électrique (32) et l'élément de connexion électrique complémentaire (108) lorsque les deux derniers éléments sont en contact l'un avec l'autre.

13. Ensemble de recharge électrique comprenant plusieurs dispositifs de recharge (2) selon l'une quelconque des revendications 1 à 8, ledit dispositif de recharge étant placé sur un poste, sur lequel le véhicule industriel ou de transport (102) fait un arrêt.
